## Europäisches Patentamt

## European Patent Office

## Office européen des brevets

(11) Veröffentlichungsnummer: **0 085 915**
**B1**

(12) **EUROPÄISCHE PATENTSCHRIFT**

(45) Veröffentlichungstag der Patentschrift:
**17.09.86**

(51) Int. Cl.⁴: **E 03 F 7/04,** F 16 K 7/17,
F 16 K 7/10

(21) Anmeldenummer: **83100813.1**

(22) Anmeldetag: **28.01.83**

(54) **Vorrichtung zum selbsttätigen Absperren von Kanalleitungen.**

(30) Priorität: **05.02.82 DE 8203083 U**

(43) Veröffentlichungstag der Anmeldung:
**17.08.83 Patentblatt 83/33**

(45) Bekanntmachung des Hinweises auf die Patenterteilung:
**17.09.86 Patentblatt 86/38**

(84) Benannte Vertragsstaaten:
**AT BE CH DE FR GB IT LI LU NL SE**

(56) Entgegenhaltungen:
**DE - B - 1 112 359
DE - U - 7 905 589
GB - A - 849 386
GB - A - 1 239 451
US - A - 2 930 396
US - A - 4 272 640**

(73) Patentinhaber: **Leu, Siegfried, Karlsbader Strasse 10,
D-6309 Rockenberg 1 (DE)**

(72) Erfinder: **Leu, Siegfried, Karlsbader Strasse 10,
D-6309 Rockenberg 1 (DE)**

(74) Vertreter: **Schlagwein, Udo, Dipl.-Ing., Anwaltsbüro
Ruppert & Schlagwein Bahnhofsallee 11, D-6350 Bad
Nauheim (DE)**

ACTORUM AG

**Beschreibung**

Die Erfindung bezieht sich auf eine Vorrichtung zum selbsttätigen Absperren von Kanalleitungen bei Rückstau, welche als Sperrelement einen einseitig in der Kanalleitung festgespannten, in nicht druckbeaufschlagtem Zustand eingebeulten Ball, eine Rückstaumeldeeinrichtung, eine Druckmittelquelle und eine automatische Druckmittelsteuereinrichtung hat und bei der die Rückstaumeldeeinrichtung aus einem Topf besteht, welcher auf einen in eine Kanalleitung führenden Gewindestutzen geschraubt und in dem ein Schwimmer angeordnet ist, gegen den ein aus dem Topf herausgeführter, mit einem Steuerventil in Verbindung stehender Stössel anliegt, der topfinnenseitig einen Bund hat. Eine solche Vorrichtung ist Gegenstand des DE-U 7 905 589.

Das in dem vorbekannten Gebrauchsmuster beschriebene Grundprinzip hat sich als Rückstausicherung in Kanalleitungen bewährt. Es zeigte sich jedoch, dass der Gebrauchswert der Vorrichtung hinsichtlich einiger Einzelheiten erhöht werden kann. Das gilt in erster Linie für die Versorgung der Vorrichtung mit einem Druckmittel. Das Gebrauchsmuster geht davon aus, dass die Druckmittelversorgung durch eine Druckmittelflasche als Druckmittelquelle erfolgen soll. Handelsüblich sind solche Druckmittelflaschen mit Kohlensäure oder einem Gas wie Frigen ($CF_2Cl_2$). Nachteilig bei solchen Druckmitteln ist es, dass der Druckmittelvorrat nur durch Wiegen der Druckmittelflasche ermittelt werden kann. Das bereitet bei solchen Vorrichtungen beträchtliche Schwierigkeiten, weil hierzu die Druckmittelflasche verschlossen und dann von der Vorrichtung demontiert werden muss. Eine kontinuierliche Überwachung des Druckmittelvorrates ist bei solchen Druckmitteln mit vertretbarem Aufwand nicht möglich. Sie wäre jedoch sinnvoll, damit ein mangelnder Druckmittelvorrat unverzüglich feststellbar ist, weil anderenfalls bei einem Rückstau die Vorrichtung die Kanalleitung nicht mehr absperren könnte.

Ein nicht gelöstes Problem bei der vorbekannten Vorrichtung liegt darin, dass bei einem Rückstau aus dem Topf der Rückstaumeldeeinrichtung zunächst die sich oberhalb des Schwimmers befindliche Luft entweichen können muss, damit der Schwimmer bei dem Rückstau ungehindert ansteigen kann. Deshalb ist eine Öffnung im Deckel des Topfes erforderlich. Diese Öffnung muss jedoch verschlossen werden, sobald der Schwimmer seine obere Position einnimmt, weil sonst das sich stauende Wasser aus dieser Öffnung herausprudeln würde. Gemäss dem genannten DE-U 7 905 589 ist ein einen Bund aufweisender Stössel beweglich aus dem Topf der Rückstaumeldeeinrichtung herausgeführt. Der Stössel muss deshalb in seiner Durchführung Spiel haben, damit er beweglich ist. Irgendeine andere Bedeutung des Spiels als die Herbeiführung einer Beweglichkeit, vermag der Fachmann dieser Schrift nicht zu entnehmen. Zu dem Bund des Stössels ist in der Schrift ebenfalls nichts gesagt. Er dürfte dazu dienen, die Bewegung des Stössels nach oben zu begrenzen, damit er nicht aus seiner Durchführung herausgedrückt werden kann.

Der Erfindung liegt die Aufgabe zugrunde, eine Vorrichtung der eingangs genannten Art derart weiterzuentwickeln, dass ein besonders zuverlässiger und einfacher Betrieb möglich ist.

Diese Aufgabe wird erfindungsgemäss dadurch gelöst, dass die Druckmittelquelle ein Luftbehälter mit einem Manometer und eine in den Luftbehälter fördernde Luftpumpe ist, dass auf dem Bund des Stössels eine Dichtung sitzt, welche in durch den Schwimmer angehobener Stellung des Stössels dichtend gegen den Deckel des Topfes anliegt und dass der Stössel der Rückstaumeldeeinrichtung so mit Spiel aus dem Deckel des Topfes geführt ist, dass die im Topf befindliche Luft nach aussen entweicht, bis dass die Dichtung gegen den Deckel anliegt.

Dank dieser erfindungsgemässen Gestaltung wird als Druckmittel statt eines besonderen Gases Luft benutzt, so dass jederzeit auf einfache Weise der Luftvorrat im Luftbehälter ergänzt werden kann. Mittels des Manometers ist eine ständige Überwachung des Druckmittelvorrates möglich. Ohne grossen Aufwand kann sogar eine automatische Überwachung verwirklicht werden. Diese kann beispielsweise dadurch erfolgen, dass das Manometer bei minimalem Druckluftvorrat einen elektrischen Kontakt schliesst und dadurch ein Warnsignal ausgelöst wird.

Das Spiel des Stössels in Verbindung mit der Dichtung auf seinem Bund erlaubt es, dass aus dem Topf der Rückstaumeldeeinrichtung beim Ansteigen des Schwimmers zunächst Luft ungehindert entweichen kann, dann jedoch die Verbindung des Topfes nach aussen verschlossen wird, so dass kein Wasser aus ihr herausprudeln kann. Die Dichtung des Stössels wird mit zunehmendem Wasserdruck zunehmend fest gegen den Deckel gedrückt, so dass zwangsläufig eine absolute Dichtheit gegeben ist. Eine Verschmutzung der Dichtung ist nicht zu befürchten, da sie dichtet, bevor das Wasser bis zu ihr hochgestiegen ist. Besonders einfach gestaltet sich die erfindungsgemässe Vorrichtung, wenn die Luftpumpe handbetätigt ist. Eine solche Ausführungsform hat den funktionellen Vorteil, dass die Vorrichtung unabhängig von Fremdenergie wird. Wenn das Manometer einen zu geringen Luftvorrat anzeigt, dann ist es auf einfache Weise möglich, mit wenigen von Hand durchgeführten Pumpenstössen den Luftvorrat wieder zu ergänzen. Auf diese Weise kann die Anlage selbst dann zuverlässig arbeiten und in betriebsbereitem Zustand gehalten werden, wenn der elektrische Strom ausgefallen ist. Hierzu im Gegensatz werden herkömmliche Absperrklappen üblicherweise mit einem elektrischen Servomotor betätigt, so dass bei Ausfall der Stromversorgung, was bei Hochwasser durchaus vorkommen kann, ein Absperren der Kanalleitung nicht mehr möglich ist.

Wenn gemäss einer anderen Ausgestaltung der Erfindung die Luftpumpe elektrisch angetrieben ist, dann kann man mittels einer automatischen Steuerung dafür sorgen, dass stets ein genügend grosser Luftvorrat in dem Luftbehälter vorhanden ist. Auf diese Weise ist auch bei längerer Abwesenheit sichergestellt, dass die erfindungsgemässe Vorrichtung stets in funktionstüchtigem Zustand bleibt. Selbst geringe Leckagen können dadurch ausgeglichen werden, dass die Pumpe entsprechend dem auftretenden Luftverlust häufiger arbeitet.

Von Vorteil ist es, wenn die Rückstaumeldeeinrichtung in Strömungsrichtung der Kanalleitung gesehen hinter dem Ball angeordnet ist. Bei dieser Anordnung läuft nach einem Rückstau das die Rückstaumeldeeinrichtung aktivierende Wasser von selbst wieder ab, so dass anschliessend die Vorrichtung selbsttätig die Kanalleitung wieder freigeben kann.

Eine andere vorteilhafte Ausgestaltung der Erfindung besteht darin, dass die Druckmittelquelle mittels eines Schaltventils mit einem zweiten, in der Kanalleitung angeordneten, nicht von der automatischen Druckmittelsteuerung betätigbaren Ball verbindbar ist. Durch diese Ausgestaltung erhält man die Möglichkeit, eine Kanalleitung unabhängig von der automatisch arbeitenden Vorrichtung zu sperren, was zum Beispiel bei längerer Abwesenheit sinnvoll ist, weil anderenfalls bei häufigem Rückstau der Luftvorrat im Luftbehälter sich erschöpfen könnte.

Durch die im Anspruch 6 gekennzeichnete Montage-Öffnung wird es möglich, sowohl den Stutzen für den Topf der Rückstaumeldeeinrichtung als auch den Ball in die Kanalleitung einzusetzen oder aus ihr auszubauen, ohne dass die Kanalleitung demontiert werden muss.

Ein einfaches, jedoch zuverlässig dichtendes Verschliessen der Montage-Öffnung ist möglich, wenn diese wie im Anspruch 7 angegeben gestaltet ist.

Als hinreichend haltbar und dauerelastisch trotz chemischer Beanspruchung im Abwasser hat sich Naturkautschuk für die Bälle erwiesen. Durch einen Zusatz gegen Rattenfrass wird verhindert, dass die Bälle von Ratten angefressen und damit undicht werden können.

Der Schwimmer in der Rückstaumeldeeinrichtung wird üblicherweise aus einem leichten Kunststoff gefertigt sein. Um auch ihn vor Rattenfrass zu schützen, ist die im Anspruch 9 angegebene Massnahme sinnvoll.

Die Erfindung lässt zahlreiche Ausführungsmöglichkeiten zu. Eine davon ist in der Zeichnung dargestellt und wird nachfolgend beschrieben. Es zeigen:

Figur 1 - einen Längsschnitt durch die erfindungsgemäss gestaltete Vorrichtung;

Figur 2 - eine Anordnung eines Steuerventils auf dem Deckel der Rückstaumeldeeinrichtung der erfindungsgemässen Vorrichtung;

Figur 3 - die Anordnung gemäss Figur 2 von der Seite gesehen.

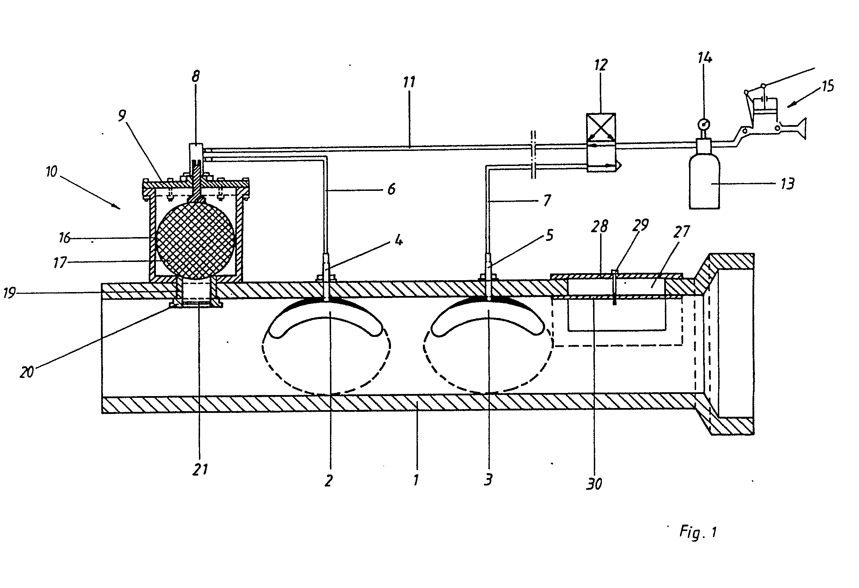

Die Figur 1 zeigt eine Kanalleitung 1, in der zwei elastische, eingebeulte Bälle 2, 3 aus Naturkautschuk angeordnet sind. Dem Naturkautschuk ist eine chemische Substanz gegen Rattenfrass beigegeben. Die Bälle 2, 3 sind einseitig gegen die obere Kanalwandung gehalten. Ein Rohrstutzen 4, 5 führt jeweils durch die Wandung der Kanalleitung hindurch in das Innere der Bälle 2, 3 und ist jeweils an eine Druckmittelleitung 6, 7 angeschlossen.

Die Druckmittelleitung 6 führt zu einem Steuerventil 8, welches als mechanisch betätigtes 3/2-Wegeventil ausgebildet ist und auf einem Deckel 9 einer Rückstaumeldeeinrichtung 10 sitzt. Von dem Steuerventil 8 führt eine Druckmittelversorgungsleitung 11 über ein als 4/2-Wegeventil ausgebildetes Schaltventil 12 zu einem Luftbehälter 13. Der Luftbehälter 13 hat ein Manometer 14 und ist mittels einer handbetätigten Luftpumpe 15 unter Druck zu setzen. Das Schaltventil 12 ist so gestaltet, dass normalerweise vom Luftbehälter 13 über die Druckmittelversorgungsleitung 11 Druckluft am Anschluss des Steuerventils 8 ansteht. Das Steuerventil 8 ist so gestaltet, dass die Druckmittelleitung 6 normalerweise Verbindung mit der Aussenluft hat, so dass der Ball 2 entlüftet ist und die dargestellte eingebeulte Form hat. Wenn das Steuerventil 8 betätigt wird, dann wird die Druckmittelleitung 6 mit der Druckmittelversorgungsleitung 11 verbunden, so dass der Ball 2 sich aufbläst und die gestrichelt dargestellte Form annimmt, in der die Kanalleitung 1 versperrt ist.

Durch Umschalten des Schaltventils 12 erhält die Druckmittelleitung 7 mit dem Luftbehälter 13 Verbindung, so dass der Ball 3 aufgeblasen werden kann.

Nunmehr sei die Rückstaumeldeeinrichtung 10 detaillierter beschrieben. Diese enthält in einem Topf 16 einen Schwimmer 17, auf dem ein axial verschieblicher Stössel 18 aufsitzt. Der Topf 16 ist auf einen Gewindestutzen 19 geschraubt, der von innen durch ein Loch der Kanalleitung 1 gesteckt ist und mit dem Bund 20 gegen die innenseitige Kanalwandung anliegt. Um zu verhindern, dass Ratten in den Gewindestutzen 19 und damit zum Schwimmer 17 vordringen können, ist radial im Gewindestutzen 19 ein Stift 21 angeordnet. Es können natürlich auch zwei Stifte oder andere Hindernisse sein.

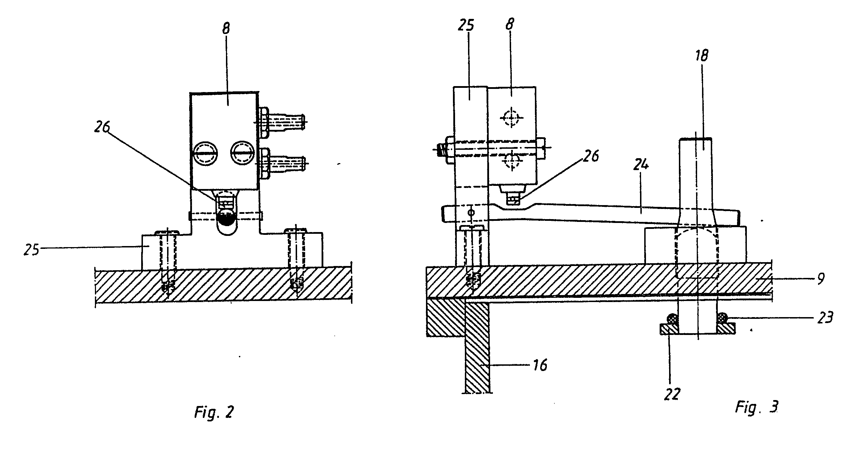

Die Figuren 2 und 3 lassen die Gestaltung der Rückstaumeldeeinrichtung deutlicher erkennen. In Figur 3 erkennt man den Topf 16 mit dem Deckel 9, durch den der Stössel 18 mit Spiel geführt ist. Der Stössel 18 hat im Inneren des Topfes 16 einen flanschartigen Bund 22, auf dem deckelseitig eine Dichtung 23 sitzt. Wird der Stössel 18 vom Schwimmer 17 angehoben, dann setzt sich die Dichtung 23 gegen den Deckel 9, so dass der Topf 16 dicht verschlossen ist. Zuvor kann Luft aus dem Topf 16 entlang dem Stössel 18 zwischen Stössel 18 und Deckel 9 entweichen.

Der Stössel 18 ist am aus dem Deckel 9 heraustretenden Ende gabelförmig ausgebildet, so dass er das freie Ende eines Hebels 24 aufnehmen kann. Der Hebel 24 ist am anderen Ende schwenkbar von einem Böckchen 25 gehalten. Zwischen dem Böckchen 25 und dem Stössel 18 liegt ein Ventilstössel 26 des Steuerventils 8 gegen den Hebel 24 an. Das Steuerventil 8 ist ebenfalls am Böckchen 25 befestigt.

Um eine Montage und Demontage aller in der Kanalleitung 1 befindlichen Bauteile auch bei einer in einer Abwasserleitung eingebauten Kanalleitung zu ermöglichen, hat, was Figur 1 zeigt, die Kanalleitung 1 eine Montageöffnung 27, welche durch einen Deckel 28 aus Kunststoff verschlossen ist. Im Deckel 28 sitzt etwa mittig eine Schraube 29, welche in einen Bügel 30 geschraubt ist. Der Bügel 30 liegt beiderseitig gegen die Innenwandung der Kanalleitung an. Zum Öffnen der Montage-Öffnung 27 lockert man die Schraube 29 und schiebt dann den Deckel 28 mit dem Bügel 30 beispielsweise zunächst nach rechts, kippt ihn anschliessend, so dass das linke Ende des Bügels 30 aus der Montage-Öffnung gelangt, und schiebt dann den Deckel schräg nach links.

Die beschriebene Vorrichtung arbeitet wie folgt:

Solange kein Rückstau in der Kanalleitung entsteht, kann Abwasser nahezu ungehindert in der Zeichnung gesehen von rechts nach links durch die Kanalleitung fliessen. Kommt es zu einem Rückstau, dann wird durch das durch den Gewindestutzen 19 in den Topf 16 eindringende Wasser der Schwimmer 17 angehoben. Dieser hebt den Stössel 18 an und verschwenkt dadurch den Hebel 24. Das wiederum führt dazu, dass der Ventilstössel 26 angehoben wird und das Steuerventil 8 umschaltet. Durch diesen Schaltvorgang wird die Druckmittelleitung 6 von der Aussenluft abgetrennt und mit der Druckmittelversorgungsleitung 11 verbunden. Auf diese Weise entsteht eine Verbindung zwischen dem Luftbehälter 13 und dem Inneren des Balls 2, so dass der Ball 2 aufgeblasen wird und die Kanalleitung 1 absperrt.

Sinkt der Schwimmer 17 bei Ende des Rückstaus im Topf 16 wieder zurück in die dargestellte Stellung, dann senkt sich auch der Stössel 18 ab, so dass das Steuerventil 8 wieder umschalten kann und das Innere des Balls 2 mit der Atmosphäre verbindet. Dadurch beult sich der Ball wieder zurück in die dargestellte Stellung und gibt die Kanalleitung 1 frei.

Der zweite Ball 3 wird von Hand mittels des Schaltventils 12 bei Bedarf aufgeblasen bzw. entlüftet.

Zeigt sich am Manometer 14, dass der Luftvorrat im Luftbehälter 13 nicht mehr ausreichend gross ist, dann kann man diesen durch einige Pumpenstösse mittels der Luftpumpe 15 wieder auf ein ausreichend grosses Niveau anheben.

**Patentansprüche**

1. Vorrichtung zum selbsttätigen Absperren von Kanalleitungen (1) bei Rückstau, welche als Sperrelement einen einseitig in der Kanalleitung (1) festgespannten, in nicht durckbeaufschlagtem Zustand eingebeulten Ball (2), eine Rückstaumeldeeinrichtung (10), eine Druckmittelquelle und eine automatische Druckmittelsteuereinrichtung hat und bei der die Rückstaumeldeeinrichtung (10) aus einem Topf (16) besteht, welcher auf einen in eine Kanalleitung (1) führenden Gewindestutzen geschraubt und in dem ein Schwimmer (17) angeordnet ist, gegen den ein aus dem Topf herausgeführter, mit einem Steuerventil (8) in Verbindung stehender Stössel (18) anliegt, der topfinnenseitig einen Bund (22) hat, dadurch gekennzeichnet, dass die Druckmittelquelle ein Luftbehälter (13) mit einem Manometer (14) und eine in den Luftbehälter (13) fördernde Luftpumpe (15) ist, dass auf dem Bund (22) des Stössels (18) eine Dichtung (23) sitzt, welche in durch den Schwimmer (17) angehobener Stellung des Stössels (18) dichtend gegen den Deckel (9) des Topfes (16) anliegt und dass der Stössel (18) der Rückstaumeldeeinrichtung (10) so mit Spiel aus dem Deckel (9) des Topfes (16) geführt ist, dass die im Topf (16) befindliche Luft nach aussen entweicht, bis dass die Dichtung (23) gegen den Deckel (9) anliegt.

2. Vorrichtung nach Anspruch 1, dadurch gekennzeichnet, dass die Luftpumpe (15) handbetätigt ist.

3. Vorrichtung nach Anspruch 1, dadurch gekennzeichnet, dass die Luftpumpe (15) elektrisch angetrieben ist.

4. Vorrichtung nach Anspruch 1 oder einem der folgenden, dadurch gekennzeichnet, dass die Rückstaumeldeeinrichtung (10) in Strömungsrichtung der Kanalleitung (1) gesehen hinter dem Ball (2) angeordnet ist.

5. Vorrichtung nach Anspruch 1 oder einem der folgenden, dadurch gekennzeichnet, dass die Druckmittelquelle mittels eines Schaltventils (12) mit einem zweiten in der Kanalleitung (1) angeordneten, nicht von der automatischen Druckmittelsteuerung betätigbaren Ball (3) verbindbar ist.

6. Vorrichtung nach Anspruch 1 oder einem der folgenden, dadurch gekennzeichnet, dass in der Mantelfläche der Kanalleitung (1) zur Montage aller in sie einzubauenden Teile eine Montageöffnung (27) vorgesehen ist, auf der ein entsprechend der Mantelfläche gekrümmter Deckel (28) aufsitzt.

7. Vorrichtung nach Anspruch 1 oder einem der folgenden, dadurch gekennzeichnet, dass der Deckel (28) einen durch die Montageöffnung (27) zu schiebenden und dann an beiden Seiten der Montageöffnung (27) innenseitig gegen die Wandung anzulegenden Bügel (30) hat, welcher mittels einer Schraube (29) in Richtung des Deckels (28) zu spannen ist.

8. Vorrichtung nach Anspruch 1 oder einem der folgenden, dadurch gekennzeichnet, dass die Bälle (2, 3) aus Naturkautschuk mit einem Rattenfrass verhindernden chemischen Zusatz bestehen.

9. Vorrichtung nach Anspruch 1 oder einem der folgenden, dadurch gekennzeichnet, dass in dem zum Schwimmer (17) führenden Gewindestutzen

(19) ein quergerichteter Stab zum Verhindern des Eindringens von Ratten vorgesehen ist.

## Claims

1. Device for the automatic closure of sewers (1) in case of backflow, the closure means of which is a ball (2) that is rigidly connected to one side in the sewer (1) and inwardly bulged when without pressure, with a backflow alarm device (10), a source of pressure and automatic pressure control means and where the backflow alarm device (10) is a pot (16) which is screwed on a threaded socket leading into a sewer (1) and containing a float (17) that is contacting a ram (18) which is led out of the pot and is connected to a control valve (8), the ram (18) having a collar (22) at the inside of the pot, characterized in that the source of pressure is an air reservoir (13) with a pressure gage (14) and an air pump (15) delivering into the air reservoir (13), that there is a sealing (23) on the collar (22) of the ram (18) sealingly contacting the cover (9) of the pot (16) if the ram (18) is lifted by the float (17) and that the ram (18) of the backflow alarm device (10) is led with clearance in such a way out of the cover (9) of the pot (16) that the air in the pot (16) can escape until the sealing (23) is contacting the cover (9).

2. Device according to claim 1, characterized in that the air pump (15) is operated manually.

3. Device according to claim 1, characterized in that the air pump (15) is driven electrically.

4. Device according to claim 1 or one of the following claims, characterized in that the backflow alarm device (10) is provided downflow the ball (2).

5. Device according to claim 1 ore one of the following claims, characterized in that the source of pressure is connectable by a control valve (12) to a second ball (3) that is provided in the sewer (1) and that cannot be operated by the automatic pressure control means.

6. Device according to claim 1 or one of the following claims, characterized in that an assembly opening (27) is provided in the area of cylindrical surface of the sewer (1) for the assembly of all parts to be assembled in the sewer (1) on which opening rests a cover (28) that is curved according to the area of cylindrical surface.

7. Device according to claim 1 or one of the following claims, characterized in that the cover (28) has a bridge (30) that is to be inserted through the assembly opening (27) and then inside is lifted against the wall on both sides of the assembly opening (27), the bridge (30) to be stressed by means of a screw (29) in direction of the cover (28).

8. Device according to claim 1 or one of the following claims, characterized in that the balls (2, 3) are made of natural caoutchouc containing a chemical additive in order to prevent their being eaten by rats.

9. Device according to claim 1 or one of the following claims, characterized in that the screwed socket (19) leading to the float (17) is bridged by a rod to prevent the access of rats.

## Revendications

1. Dispositif pour l'obturation automatique de conduites de canalisations ou d'égouts (1) en cas de retenue ou de reflux du liquide, qui comporte, en tant qu'élément d'obturation, une balle ou un ballon (2) fixé unilatéralement dans la conduite (1), aplati dans l'état non soumis à l'action d'une pression, un appareillage de notification de retenue ou de reflux (10), une source d'un moyen créant la pression et un dispositif automatique de commande du moyen créant la pression et dans lequel l'appareillage de notification du reflux (10) est constitué d'un pot (16) qui est vissé sur un raccord fileté amenant dans la conduite (1) et dans lequel est disposé un flotteur (17) sur lequel prend appui un poussoir (18) guidé hors du pot et coopérant avec une soupape de commande (8), ce poussoir (18) ayant, à l'intérieur du pot, un épaulement (22) caractérisé en ce que la source du moyen créant la pression est un réservoir d'air (13) et un manomètre (14) et une pompe à air (15) débitant dans le réservoir d'air (13), un joint d'étanchéité (23) est placé sur l'épaulement (22) du poussoir (18), joint qui prend appui sur le couvercle (9) du pot (16) en assurant l'étanchéité dans la position de soulèvement par le flotteur (17) du poussoir (18) et le poussoir (18) de l'appareillage de notification du reflux (10) traverse le couvercle (9) du pot (16) avec un jeu tel que l'air se trouvant dans le pot (16) s'échappe vers l'extérieur jusqu'à ce que le joint d'étanchéité (23) prenne appui sur le couvercle (9).

2. Dispositif selon la revendication 1 caractérisé en ce que la pompe à air (15) est actionnée à la main.

3. Dispositif selon la revendication 1 caractérisé en ce que la pompe à air (15) est commandée électriquement.

4. Dispositif selon la revendication 1 ou l'une des suivantes caractérisé en ce que l'appareillage de notification du reflux (10) est disposé derrière le ballon (2), si l'on considère le sens d'écoulement dans la conduite (1).

5. Dispositif selon la revendication 1 ou l'une des suivantes caractérisé en ce que la source du moyen créant la pression peut être mise en communication au moyen d'une soupape de commande (12) avec un deuxième ballon ou balle (3) disposé dans la conduite (1), qui ne peut pas être actionné par la commande automatique du moyen créant la pression.

6. Dispositif selon la revendication 1 ou l'une des suivantes caractérisé en ce qu'on a prévu dans la surface latérale de la canalisation (1), pour le montage de toutes les pièces devant y être montées, une ouverture de montage (27) sur laquelle est placé un couvercle (28) ayant une courbure correspondant à celle de la surface latérale.

7. Dispositif selon la revendication 1 ou l'une des suivantes caractérisé en ce que le couvercle (28) comporte une traverse (30) qu'on doit faire passer à travers l'ouverture de montage et appliquer à l'intérieur sur les deux côtés de l'ouverture de montage (27) contre la paroi, cette traverse (30) devant être serrée au moyen d'une vis (29) en direction du couvercle (28).

8. Dispositif selon la revendication 1 ou l'une des suivantes caractérisé en ce que les balles (2, 3) sont en caoutchouc naturel additionné d'une substance chimique empêchant le rongement par les rats.

9. Dispositif selon la revendication 1 ou l'une des suivantes caractérisé en ce que dans le raccord fileté (19) amenant au flotteur (17) on prévoit une barre disposée transversalement pour empêcher la pénétration de rats.

Fig. 1

Fig. 2

Fig. 3

0 085 915